# EUROPEAN PATENT APPLICATION

(11) **EP 2 722 635 A2**
(43) Date of publication of application: **23.04.2014**
(21) Application number: 13188331.6
(22) Date of filing: 11.10.2013
(51) Int. Cl.: F41H 5/04, F41H 5/013

(54) **Structural ballistic protection panel**

(30) Priority: 19.10.2012 US 201213655936
(71) Applicant: Sikorsky Aircraft Corporation, Stratford, CT 06615 (US)
(72) Inventor: Bird, Connie E., Rocky Hill, CT Connecticut 06067 (US); Hamilton, Gary, Middletown, CT Connecticut 06457 (US); Goodworth, Alan R., Oxford, CT Connecticut 06478 (US)
(74) Representative: Klunker . Schmitt-Nilson . Hirsch

(57) **Abstract**

A structural panel (40) includes a stiff composite material that establishes a base layer (42) of the panel. A high molecular weight polyethylene fiber composite material establishes a ballistic protection layer (44) of the panel that is secured to the base layer (42). A second composite material layer (46) received against the ballistic protection layer (44) such that the ballistic protection layer (44) is situated between the second composite material layer (46) and the base layer (42) for providing a depth for recessed features.

## Description

There are a variety of uses for ballistic protection materials. For example, personal armor, such as bullet proof vests, is useful for protecting individuals. Some ballistic protection materials have been incorporated into vehicles, such as military aircraft, ships or land vehicles. One aspect of most ballistic protection materials used for vehicle applications is that they are added on the vehicle to supplement the structural materials of the vehicle. While this approach is valuable in that it provides protection for occupants and vehicle components it has the drawback of adding weight and expense.

Another aspect of some ballistic protection materials is that they are designed for a specific purpose or to protect against an attack that involves a particular type of ammunition. It therefore may not be possible to utilize one type of ballistic protection material intended for one application in a different context.

According to an embodiment, a structural panel includes, among other things, a stiff composite material that establishes a base layer of the panel having a desired shape. A high molecular weight polyethylene fiber composite material establishes a ballistic protection layer of the panel that is secured to the base layer. A second composite material layer received against the ballistic protection layer such that the ballistic protection layer is situated between the second composite material layer and the base layer for providing a depth for recessed features.

Particular embodiments may include any of the following optional features, alone or in combination:
The base layer, the ballistic protection layer and the second composite material layer may be bonded together.

The second composite material layer may provide for a depth for at least one recessed feature.

The structural panel further may comprise a mounting plate having a base and a sidewall extending from an edge of the base to establish a recess, the mounting plate base being received against a first portion of the ballistic protection layer, the first portion of the ballistic protection layer having a first thickness, a second portion of the ballistic layer having a second, greater thickness; and a mounting member situated at least partially within the recess, the mounting member being configured for securing an item in a selected position relative to the structural panel.

The ballistic protection layer may have at least the first thickness across an entire surface area of the structural panel.

The base layer may comprise glass fibers.

The base layer may comprise magnesium aluminosilicate glass fibers.

The base layer may comprise at least one of a tape or a fabric comprising the glass fibers.

The base layer may comprise carbon fibers.

The base layer may comprise a fiber reinforced ceramic matrix composite material.

According to a further embodiment, a vehicle, comprises a frame structure; and a structural panel secured to at least a portion of the frame structure, the structural panel, comprising: a stiff composite material that establishes a base layer of the panel; a high molecular weight polyethylene fiber composite material that establishes a ballistic protection layer of the panel secured to the base layer; and a second composite material layer received against the ballistic protection layer such that the ballistic protection layer is situated between the second composite material layer and the base layer.

Particular embodiments may include any of the following optional features, alone or in combination:
The base layer, the ballistic protection layer and the second sandwich composite material layer may be bonded together.

The vehicle may comprise an aircraft.

The vehicle may comprise a helicopter.

The structural panel may establish at least a floor of the vehicle.

The vehicle further may comprise a mounting plate having a base and a sidewall extending from an edge of the base to establish a recess, the mounting plate base being received against a first portion of the ballistic protection layer, the first portion of the ballistic protection layer having a first thickness, a second portion of the ballistic layer having a second, greater thickness; and a mounting member situated at least partially within the recess, the mounting member being configured for securing an item in a selected position relative to the floor of the vehicle.

The ballistic protection layer may have at least the first thickness across an entire surface area of the floor.

The second composite material layer may provide a depth for at least one recessed feature.

The base layer may comprise at least one of glass fibers, carbon fibers, or a fiber reinforced ceramic matrix composite material.

The base layer may comprise magnesium aluminosilicate glass fibers.

The various features and advantages of at least one disclosed example embodiment will become apparent to those skilled in the art from the following detailed description. The drawings that accompany the detailed description can be briefly described as follows.
Figure 1 schematically illustrates an example vehicle including at least one structural panel designed according to an example embodiment.
Figure 2 schematically illustrates an example frame portion and an example structural panel useful with the embodiment shown in Figure 1.
Figure 3 is a cross-sectional illustration of an example structural panel composition.
Figure 4 illustrates an example mounting structure that is compatible with the structural panel of Figure 3.

A structural panel that is useful, for example, as a structural panel for a vehicle provides ballistic protection. The structural panel is stiff and strong enough to be self-supporting and weight bearing yet light weight and an effective ballistic protection layer.

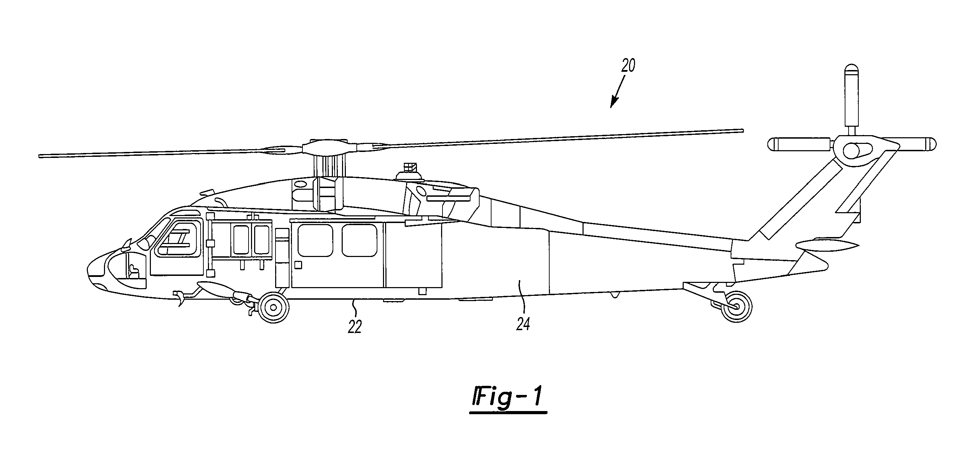

Figure 1 schematically shows an example vehicle 20 including a plurality of structural panels 22 and 24. The illustrated vehicle is an aircraft. In particular, a rotary wing aircraft is illustrated for discussion purposes. Other types of vehicles such as land vehicles or watercraft may include structural panels designed according to the teachings of this disclosure.

In Figure 1, the structural panel 22 establishes a floor of the vehicle 20. One feature of a structural panel designed according to the teachings of this disclosure is that the panel is stiff, lightweight and capable of establishing a floor of the vehicle 20 while providing ballistic protection.

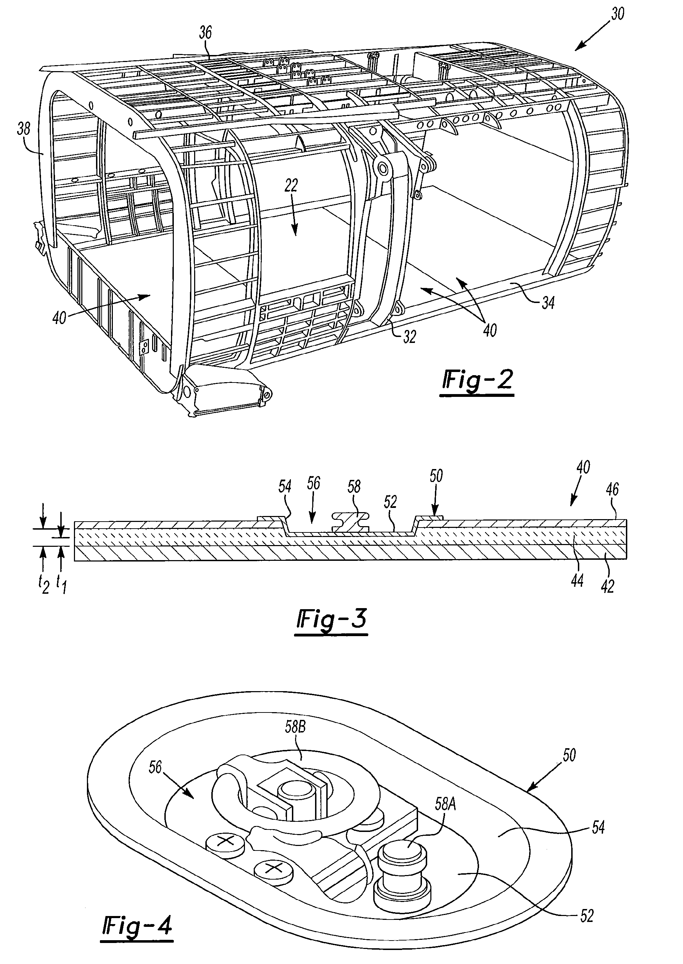

Figure 2 illustrates a frame portion 30 of the example vehicle 20. The frame portion 30 in this example includes a plurality of frame members 32, 34, 36 and 38 configured to establish a portion of the fuselage or passenger compartment of the vehicle 20. The structural panel 22, which establishes the floor of the vehicle 20, in this example includes a plurality of individual panels 40. In one example embodiment, each panel 40 is structurally stable enough to support the weight of individuals and cargo. Each panel 40 is situated relative to the frame portion 30 to remain in a desired position relative to a remainder of the vehicle 20.

The panels 40 are self-supporting and capable of bearing a preselected amount of weight when they are sufficiently supported by the frame portion 30. For example, provided that tub structure members (not visible from the perspective of Figure 2) support the panel 40, the panel is capable of bearing weight across the surface of the panel. Each panel 40 includes at least two layers that establish the structural integrity of the panels along with providing ballistic protection for occupants or cargo in the vehicle 20.

Figure 3 is a cross-sectional illustration of an example composition of the example structural panels 40. This example includes a stiff material layer 42 that establishes a base layer of the panel 40. The base layer 42 can be considered a strike face as it faces the direction from which a projectile would approach the vehicle during an attack.

The base layer in one embodiment is a composite material including fibers for strength and stiffness. Some example base layers include carbon fibers. One feature of an embodiment containing carbon fibers is that the carbon layer may be very thin, which contributes to making the panels 40 very lightweight.

Other example base layers 42 include glass fibers. One particular example includes magnesium aluminosilicate (S-2) glass fibers. Some example base layers 42 comprise at least one of a glass fiber fabric or tape.

Another example base layer 42 includes a fiber reinforced ceramic matrix composite material.

A ballistic protection layer 44 comprises a high molecular weight polyethylene fiber composite material. Such materials are useful as a ballistic protection layer because they include extremely long chains of polyethylene, which all align in the same direction. The material derives its strength largely from the length of each individual chain. The long chains serve to transfer load more effectively to the polymer backbone by strengthening intermolecular interactions. Such materials are useful for ballistic protection because of their toughness and high impact strength. Commercially available materials that may be used in some example embodiments include DYNEEMA^{®} and SPECTRA^{®}.

The illustrated example includes a third, sandwich composite layer 46 that provides additional features. The base layer 42 and sandwich composite layer 46 establish the structural stiffness and the ballistic protection layer 44 establishes the protective aspects of the example panels 40.

The sandwich composite layer 46 provides a barrier or covering over the ballistic protection layer 44 to guard against potential impact from individuals or items placed on the floor 22 of the vehicle 20 Some high molecular weight polyethylene fiber composite materials may not be considered suitable as a floor surface and adding a covering, such as the layer 46, increases the utility of the panel 40 without adding substantial weight.

The example sandwich composite layer 46 also adds depth to the panel 40. In some example embodiments, it will be desirable to secure items or components to the panel 40. For example, Figure 3 includes a mounting plate 50 having a base 52 and a sidewall 54 that establish a recess 56. A mounting member 58 is at least partially situated in the recess 56 and provides a structure to which another item such as a seat or cargo may be secured in place within the vehicle 20.

The mounting plate 50 is received against a portion of the ballistic protection layer 44 with some of the layer 46 received against at least some of the sidewall 54. The ballistic protection layer 44 in this example has a first thickness t1 along the portion that abuts the base 52 of the mounting plate 50. A remainder of the illustrated section of the ballistic protection layer 44 has a second, greater thickness t2. With the illustrated arrangement, even portions of the panel 40 that are used for securing another structure in place include at least a partial layer of ballistic protection. This feature provides additional protection compared to arrangements in which a ballistic material is added onto a separate structural panel because the ballistic material typically cannot be provided along the portions that include structures such as a mounting plate.

An example mounting plate 50 that is useful in some example embodiments is shown in Figure 4. A first mounting member 58a comprises a post for mounting a seat against the panel 40. A second mounting member 58b comprises a cargo tie-down structure such as a ring. The structural panels 40 are each capable of having several mounting plates 50 of various configurations secured to them to facilitate mounting seats or securing other items in a desired place within the vehicle 20.

The preceding description is illustrative rather than limiting in nature. Variations and modifications to the disclosed examples may become apparent to those skilled in the art. The scope of legal protection can only be determined by studying the following claims.

## Claims

1. A structural panel (22), comprising:
a stiff composite material that establishes a base layer (42) of the panel;
a high molecular weight polyethylene fiber composite material that establishes a ballistic protection layer (44) of the panel secured to the base layer (42); and
a second composite material layer (46) received against the ballistic protection layer (44) such that the ballistic protection layer is situated between the second composite material layer (46) and the base layer (42).

2. The structural panel (22) of claim 1, wherein the base layer (42), the ballistic protection layer (44) and the second composite material layer (46) are bonded together.

3. The structural panel (22) of claim 1 or 2, wherein the second composite material layer (46) provides for a depth for at least one recessed feature.

4. The structural panel (22) of claim 3, comprising
a mounting plate (50) having a base (52) and a sidewall (54) extending from an edge of the base (52) to establish a recess, the mounting plate base (52) being received against a first portion of the ballistic protection layer (44), the first portion of the ballistic protection layer (44) having a first thickness (t₁), a second portion of the ballistic layer (44) having a second, greater thickness (t₂); and
a mounting member (58a) situated at least partially within the recess, the mounting member (58a) being configured for securing an item in a selected position relative to the structural panel (22).

5. The structural panel (22) of claim 4, wherein the ballistic protection layer (44) has at least the first thickness (t₁) across an entire surface area of the structural panel (22).

6. The structural panel (22) of any of claims 1 to 5, wherein the base layer (42) comprises glass fibers.

7. The structural panel (22) of claim 6, wherein the base layer (42) comprises magnesium aluminosilicate glass fibers.

8. The structural panel (22) of claim 6 or 7, wherein the base layer (42) comprises at least one of a tape or a fabric comprising the glass fibers.

9. The structural panel (22) of any of claims 1 to 8, wherein the base layer (42) comprises carbon fibers.

10. The structural panel (22) of any of claims 1 to 9, wherein the base layer (42) comprises a fiber reinforced ceramic matrix composite material.

11. A vehicle (20), comprising
a frame structure (30); and
a structural panel (22) according to any of the previous claims, the structural panel (22) secured to at least a portion of the frame structure (30).

12. The vehicle (20) of claim 11, wherein the vehicle (20) comprises an aircraft.

13. The vehicle (20) of claim 12, wherein the vehicle (20) comprises a helicopter.

14. The vehicle (20) of any of claims 11 to 13, wherein the structural panel (22) establishes at least a floor of the vehicle (20).
